(19) **Europäisches Patentamt**
**European Patent Office**
**Office européen des brevets**

(11) **EP 4 471 643 A1**

(12) **EUROPÄISCHE PATENTANMELDUNG**

(43) Veröffentlichungstag:
04.12.2024  Patentblatt 2024/49

(21) Anmeldenummer: 23176350.9

(22) Anmeldetag: 31.05.2023

(51) Internationale Patentklassifikation (IPC):
**G06F 21/64** (2013.01)    **H04L 9/06** (2006.01)
**H04L 9/12** (2006.01)    **H04L 9/40** (2022.01)

(52) Gemeinsame Patentklassifikation (CPC):
**G06F 21/64; H04L 9/065; H04L 63/0457;**
**H04L 63/123**

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**KH MA MD TN**

(71) Anmelder: **Siemens Mobility GmbH**
**81739 München (DE)**

(72) Erfinder: **Seemann, Markus**
**38102 Braunschweig (DE)**

(74) Vertreter: **Siemens Patent Attorneys**
**Postfach 22 16 34**
**80506 München (DE)**

(54) **VERFAHREN ZUR VERSCHLÜSSELTEN NACHRICHTENÜBERTRAGUNG MIT EINEM SICH INVALIDIERENDEN SCHLÜSSEL**

(57)    Es wird ein Computer-implementiertes Verfahren zur Nachrichtenübertragung beschrieben, das Verfahren aufweisend:
Verschlüsseln (E) eines Klartexts (P) unter Verwenden von zumindest einem Schlüssel (KS), um einen Chiffretext (C) zu erhalten, derart, dass eine Manipulation des Chiffretexts (C') den zumindest einen Schlüssel (KS) bezüglich eines Entschlüsselns (D) invalidiert, und Übertragen des Chiffretexts (C) im Rahmen der Nachrichtenübertragung.

FIG 1

EP 4 471 643 A1

**Beschreibung**

Technisches Gebiet

Die Erfindung bezieht sich auf ein Computer-implementiertes Verfahren zur Übertragung von verschlüsselten Nachrichten, insbesondere im Bereich der Schienen-Infrastruktur. Ferner betrifft die Erfindung ein Nachrichtenübertragung-System mit einer Sender-Einheit, einer Empfänger-Einheit, und einem Übertragungs-Netzwerk. Weiterhin betrifft die Erfindung ein Verwenden eines Verschlüsselungsprotokolls und ein Computerprogrammprodukt.

Die Erfindung kann sich somit auf das technische Gebiet der Kommunikationstechnologie beziehen, insbesondere der Übertragung von verschlüsselten Nachrichten, z.B. bezüglich einer Schienen-Infrastruktur.

Technischer Hintergrund

Die moderne Technologie-Entwicklung bewegt sich in vielen Bereichen stetig entgegen einer immer dichteren Vernetzung von Einheiten, welche z.B. über ein Netzwerk in Kommunikation miteinander stehen. Entsprechend werden Nachrichten zwischen den einzelnen Einheiten über das Netzwerk übertragen, wobei zu einem gewissen Grad eine Automatisierung im System erreicht werden kann. Beispielsweise können im Bereich der Schienen(fahrzeug)-Infrastruktur Zugsteuerungssysteme miteinander kommunizieren bzw. miteinander vernetzt sein. Weiterhin können die Zugsteuerungssysteme über eine Leitstelle oder ein Stellwerk vernetzt sein. Inhalte der übertragenen Nachrichten können sich z.B. auf Weichenstellungen oder Signale (insbesondere Ampelsignale) beziehen.

Im Bahnbereich sind jedoch hohe Sicherheitsstandards zu beachten, schließlich geht es um das Leben einer Vielzahl von Passagieren. Entsprechend gelten auch hohe Standards für die Sicherheit einer solchen Datenübertragung. Beispielsweise regeln die Standards EN50159 und EN50129 eine Nachrichtenübertragung über ein (nicht-vertrauenswürdiges) Netzwerk.

Eine besondere Problematik kann in diesem Fall aber nicht nur darin bestehen, dass Nachrichten unterwegs von einem Angreifer abgefangen und gelesen werden, sondern, dass Nachrichten unterwegs manipuliert werden. Schlimmstenfalls kann z.B. eine Nachricht derart manipuliert werden, dass aus einem roten Signal ein grünes Signal wird.

Um die Integrität der übertragenen (und verschlüsselten) Nachrichten zu schützen wird gewöhnlich ein sogenannter MAC (message authentication code) eingesetzt, welcher bei Empfang der Nachricht kontrolliert wird (kryptografische Integritätskontrolle). Zusätzlich oder alternativ kann eine massive und/oder unvorhergesehene Beschädigung der Integrität ohne eine kryptografische Integritätskontrolle mit hoher Wahrscheinlichkeit festgestellt werden. Dies auch im Fall, wenn die MAC Kontrolle versagen sollte, so dass bezüglich der Nachrichtenübertragung von "ausfallsicher" (fail-safe) gesprochen werden kann. Allerdings gelten die genannten Bedingungen im Wesentlichen für nicht-malleable Verschlüsselungsprotokolle.

Der Begriff "nicht-malleabel" kann in diesem Kontext insbesondere bedeuten, dass es keinen ausführbaren Angriffsvektor gibt, um den Chiffretext C eines Klartexts P in einen anderen Chiffretext C' eines anderen gültigen/plausiblen Klartexts P' zu übertragen/manipulieren, ohne hierfür den Schlüssel zu kennen (z.B. Block-Chiffre).

Im Gegenzug kann der Begriff "malleabel" in diesem Kontext insbesondere bedeuten, dass es einen ausführbaren Angriffsvektor gibt, um den Chiffretext C eines Klartexts P in einen anderen Chiffretext C' eines anderen gültigen/plausiblen Klartexts P' zu übertragen/manipulieren, ohne den Schlüssel zu kennen (z.B. Strom-Chiffre).

In einer Vielzahl von Netzwerken, insbesondere im Bereich der Schienen-Infrastruktur, können solche malleablen Verschlüsselungsprotokolle zum Einsatz kommen. Im Vergleich zu nicht-malleablen Verschlüsselungsprotokollen kann der Vorteil insbesondere in der Performance, insbesondere der Geschwindigkeit, liegen. Malleable Verschlüsselungsprotokolle können homomorphe Chiffren sein, wie z.B. Strom-Chiffren.

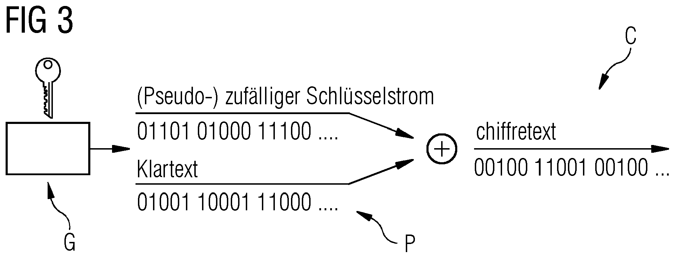

Ein anschauliches Beispiel einer Strom-Chiffre ist in Figur 3 gezeigt: ein Klartext (plain text P) besteht aus einer Bitfolge und soll verschlüsselt werden. Ein Schlüsselgenerator G produziert einen pseudo-zufälligen (pseudo-random) Schlüsselstrom, mittels welchem der Klartext in den Chiffretext (cipher text C) verschlüsselt wird.

Im Gegensatz zu einem nicht-malleablen Verschlüsselungsprotokoll wie einer Blockchiffre (z.B. AES) ändert sich die Position der einzelnen Bits der Bitfolge bei der Verschlüsselung nicht. Das bedeutet, dass, wenn ein Angreifer die relevante Bitposition in der Bitfolge kennt, er diese manipulieren kann, ohne hierfür die Nachricht entschlüsseln (bzw. lesen) zu können. Dadurch wäre es z.B. möglich ein Signal während der Nachrichtenübertragung zu ändern, ohne einen Entschlüsselungsschlüssel zu besitzen.

Im Falle, dass ein solcher Angriff stattfinden sollte, kann es primär darum gehen überhaupt festzustellen, dass eine Manipulation stattgefunden hat. Wie oben bereits diskutiert, kann dies bei malleablen Verschlüsselungsprotokollen herausfordernder sein als bei nicht-malleablen Verschlüsselungsprotokollen.

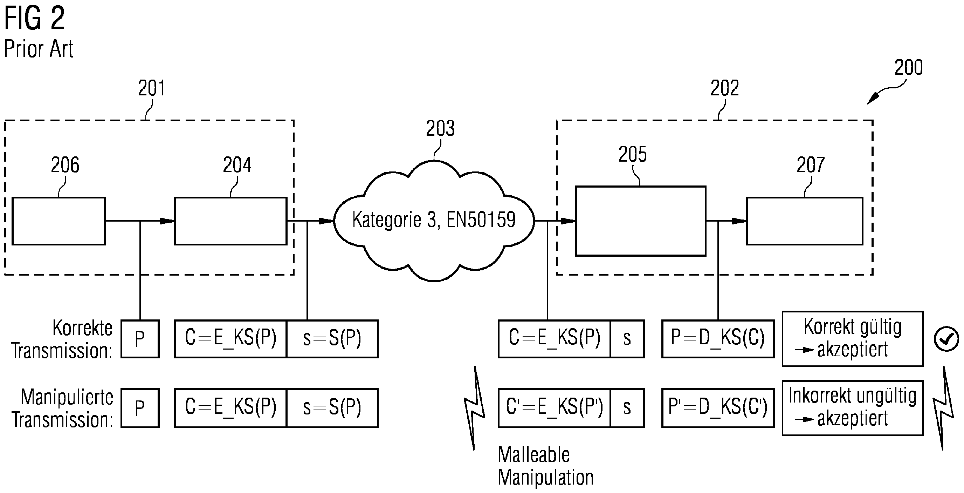

Figur 2 zeigt detailliert eine konventionelle Nachrichtenübertragung 200 über ein nicht vertrauenswürdiges Netzwerk 203 zwischen einer Sender-Einheit 201 (z.B. in einer Leitstelle) und einer Empfänger-Einheit 202 (z.B. in einem Zug). Die Sender-Einheit 201 weist eine sicherheitsrelevante Applikation (z.B. bezüglich Ampelsignalen) 206 auf, welche mit einer sogenannten Krypto-Box 204 gekoppelt ist. Entsprechend weist die Empfänger-Einheit 202 ebenfalls eine Krypto-Box 205 auf, welche mit einer weiteren sicherheitsrelevanten Applikation 207 gekoppelt ist. Zwischen Applikation 206, 207 und Krypto-Box 204, 205 wird jeweils der Klartext P übertragen, während zwischen den Krypto-Boxen 204, 205 (und über das Netzwerk 203) der Chiffretext C übertragen wird. Das Netzwerk 203 hat in diesem Beispiel die Sicherheitskategorie 3 und entspricht dem Standard EN50159.

In diesem exemplarischen Beispiel läuft die Nachrichtenübertragung nach dem im Folgenden beschriebenen Verschlüsselungsprotokoll. Zunächst wird eine Tabelle zur Übersicht der Begrifflichkeiten eingeblendet.

| P | Klartext (plaintext) zum Übertragen; wird wieder hergestellt (restored) mit P=D_KS(C). |
|---|---|
| C | Chiffretext (ciphertext); abgeleitet von P mittels: C=E_KS(P). |
| KM | Im Voraus geteilter (pre-shared) symmetrischer Masterschlüssel. |
| KS | Klartext-abhängiger symmetrischer Verschlüsselungsschlüssel; abgeleitet mittels KS=G(KM,s) Beispiel: Im Fall, dass eine Strom-Chiffre für die Verschlüsselungsfunktion E verwendet wird, kann das Paar (KM,s) als initialer Wert für einen Schlüsselstrom-Generator G dienen. |
| G | Im Voraus geteilter Schlüsselgenerator |
| s | Pseudo-zufälliger Klartext-abhängiger salt Wert; abgeleitet mittels s=S(P) Beispiel: s=S(P) kann der Wert der Hash-Funktion (Prüfsumme) sein, welche für den Klartext verwendet wird. Bemerkung: Da s (oder S) pseudo-zufällig ist, ändert sich der Wert in jeder Bitposition mit einer 50% Wahrscheinlichkeit, wenn sich zumindest ein Bit des Klartexts ändert. Diese Eigenschaft stellt sicher, dass s (oder S) die Eigenschaft eines MAC mit dem Verschlüsselungsschlüssel KS hat, weil der Empfänger die kryptografische Integritätskontrolle durchführt (Schritt 7 unten), indem KS in der Berechnung von S(P)=S(D_KS(C)) verwendet wird (siehe Schritt 6). |
| S | Im Voraus geteilte pseudo-zufällige salt Funktion. |
| E | Verschlüsselungsfunktion Beispiel: E kann als eine Strom-Chiffre ausgewählt sein. |
| D | Entschlüsselungsfunktion für E. |

Verschlüsselungsprotokoll:

1. Im Voraus teilen von KM, G, S zwischen Sender-Einheit 201 und Empfänger-Einheit 202.
2. Die Sender-Einheit 201 leitet s=S(P) ab und dann

$$KS=G(KM,s).$$

3. Die Sender-Einheit 201 erzeugt den Chiffretext C:

$$C=E\_KS(P).$$

4. Die Sender-Einheit 201 überträgt das Paar (C,s) an die Empfänger-Einheit 202.

Variante:

Anstelle von (C,s) wird das Paar (C, Enc(s)) übertragen, wobei Enc(s) ein verschlüsselter Wert von s ist, abgeleitet mittels einer anderen Verschlüsselungsfunktion Enc. In diesem Fall entschlüsselt die Empfänger-Einheit 202 Enc(s) bevor s verwendet wird.

5. Die Empfänger-Einheit 202 leitet den Entschlüsselungsschlüssel ab: KS=G(KM,s).
6. Die Empfänger-Einheit 202 entschlüsselt den Klartext P:

$$P=D\_KS(C).$$

7. Die Empfänger-Einheit 202 bewertet die Integrität von dem entschlüsselten Klartext P mittels Kontrollieren von s=S(P) (kryptografische Integritätskontrolle).

Nun können aber folgende Schwierigkeiten auftreten:

i) wenn E ein malleables Verschlüsselungsprotokoll ist (siehe Definition oben), dann könnte der Empfänger eine manipulierte Übertragung (C',s) (Variante: (C',Enc(s)) entschlüsseln, wie von dem Angreifer, gewünscht zu P'=D_KS(C'). Dies kann daran liegen, dass der symmetrische Verschlüsselungsschlüssel KS trotz der Manipulation des Chiffretextes C' korrekt wiederhergestellt wird mittels KS=G(KM,s).

ii) die kryptographische Integritätskontrolle (MAC) würde gewöhnlich bemerken, dass s^S(P').

In dem Fall jedoch, dass die kryptographische Integritätskontrolle versagen sollte (und dieser Fall kann nie gänzlich ausgeschlossen werden), würde der manipulierte Klartext P' akzeptiert und weiterverarbeitet werden, denn P' ist trotz der Manipulation valide (hier eingezeichnet als: inkorrekt, gültig, akzeptiert). Dieses Szenario kann eine reale Bedrohung darstellen.

Zusammenfassung der Erfindung

Es kann ein Bedarf bestehen, eine sichere und zuverlässige Nachrichtenübertragung (z.B. im Bereich der Schieneninfrastruktur) bereitzustellen, insbesondere für ein malleables Verschlüsselungsprotokoll.
Ein Verfahren, ein System, ein Verwenden, und ein Computerprogrammprodukt werden im Folgenden beschrieben.
Gemäß einem ersten Aspekt der Erfindung wird ein (insbesondere Computer-implementiertes) Verfahren beschrieben zum Übertragen von Nachrichten (bzw. eines Texts), das Verfahren aufweisend:

i) Verschlüsseln eines (unverschlüsselten) Klartexts unter Verwenden von zumindest einem Schlüssel (z.B. ein Verschlüsselungsschlüssel und/oder ein Master-Schlüssel, insbesondere unter Verwenden eines ersten Integritätsschutzes), um einen (verschlüsselten) Chiffretext zu erhalten (insbesondere Versehen des Chiffretexts mit einem zweiten Integritätsschutz), derart, dass eine Manipulation (insbesondere durch einen Angreifer) des Chiffretexts den zumindest einen Schlüssel bezüglich eines Entschlüsselns invalidiert (bzw. sich der Entschlüsselungsschlüssel selbst zerstört), und
ii) insbesondere Übertragen des Chiffretexts im Rahmen der Nachrichtenübertragung.

Auf vergleichbare Weise lässt sich ein komplementäres Entschlüsseln formulieren.
Gemäß einem zweiten Aspekt der Erfindung wird ein Nachrichtenübertragung-System (bzw. eine Anordnung) beschrieben, insbesondere im Bereich der Schienen-Infrastruktur, aufweisend:

i) eine Sender-Einheit, eingerichtet zum Übertragen einer Nachricht wie oben beschrieben,
ii) eine Empfänger-Einheit, eingerichtet zum Empfangen der Nachricht (insbesondere wie unten beschrieben), und
iii) ein Übertragungsmedium, insbesondere ein Netzwerk, über welches die Nachricht übertragen wird.

Gemäß einem dritten Aspekt der Erfindung wird ein Verwenden beschrieben eines Verschlüsselungsprotokolls, bei welchem sich (zumindest) ein Schlüssel bei einer Manipulation eines gekoppelten Chiffretexts selbst bezüglich einem Entschlüsseln invalidiert, um (dadurch) eine ausfallsichere Nachrichtenübertragung bereitzustellen, insbesondere im Fall eines malleablen Verschlüsselungsprotokolls.
Gemäß einem vierten Aspekt der Erfindung wird ein Computerprogrammprodukt beschrieben, welches Befehle aufweist, die bei der Ausführung des Programms durch einen Computer diesen veranlassen, das Verfahren wie oben beschrieben auszuführen.
Im Kontext dieses Dokuments kann sich der Begriff "Schlüssel" insbesondere auf eine Information im kryptografischen Kontext beziehen, welche einen kryptographischen Algorithmus bzw. ein Verschlüsselungs-/Entschlüsselungsprotokoll ermöglicht bzw. parametrisiert. In anderen Worten kann ein Schlüssel verwendet werden, um einen Klartext in einen Chiffretext (und umgekehrt) zu übertragen bzw. den kryptographischen Algorithmus entsprechend zu steuern. In einem exemplarischen Beispiel kann ein Schlüssel eine Bitfolge aufweisen. Ein Schlüssel kann zwischen den Einheiten einer (verschlüsselten) Nachrichtenübertragung ausgetauscht/geteilt werden (z.B. ein Masterschlüssel). Ferner kann ein Schlüssel aus ein oder mehr weiteren Informationen (bzw. Teilschlüsseln) ableitbar sein (z.B. ein Verschlüsselungsschlüssel). In einem exemplarischen Beispiel kann ein Verschlüsselungsschlüssel KS aus einem Masterschlüssel KM, einem Schlüsselgenerator G, und einem Integritätsschutz s abgeleitet werden (KS=G(KM,s)).

Im Kontext dieses Dokuments kann sich der Begriff "Verschlüsseln/Entschlüsseln" insbesondere auf das Übertragen eines Klartexts in einen Chiffretext (und umgekehrt) beziehen. Ferner kann sich der Begriff "Verschlüsseln/Entschlüsseln" im vorliegenden Kontext aber auch darauf beziehen, dass ein Integritätsschutz erstellt bzw. verwendet wird. So kann z.B. das Verschlüsseln eines Klartexts auch ein Erstellen bzw. Verwenden eines Integritätsschutzes (z.B. eines salt Werts) aufweisen. Wird beispielsweise der Chiffretext verschlüsselt, so kann dies auch derart zu verstehen sein, dass ein Integritätsschutz bezüglich des Chiffretexts erstellt/verwendet wird. Weiterhin kann ein Verschlüsseln auch ein Erstellen eines Verschlüsselungsschlüssels aufweisen, welcher aus einem oder mehr weiteren Schlüsseln ableitbar ist. Gleiches kann ebenso für das Entschlüsseln gelten. Zusätzlich kann auch ein Integritätsschutz verschlüsselt bzw. entschlüsselt werden.

Im Kontext dieses Dokuments kann sich der Begriff "invalidieren" insbesondere darauf beziehen, dass ein oder mehr Schlüssel (insbesondere Entschlüsselungsschlüssel) ihre Gültigkeit verlieren, insbesondere zerstört werden. In diesem Fall kann es verunmöglicht sein einen validen (und korrekten) Klartext aus einem assoziierten Chiffretext zu erhalten, dessen Schlüssel bezüglich des Entschlüsselns invalidiert wurde. Beispielsweise kann ein Schlüssel aus ein oder mehr weiteren Informationen ableitbar sein und dadurch invalidiert werden, dass zumindest eine dieser Informationen manipuliert werden. Eine solche Manipulation kann durch einen Angreifer geschehen, der einen Chiffretext manipulieren möchte. In einem bevorzugten Beispiel invalidiert der Angreifer selbst durch seine Manipulation eine Information (z.B. einen Integritätsschutz) bezüglich des Chiffretexts, so dass ein von der Information abhängiger (Entschlüsselungs-) Schlüssel zerstört wird.

Gemäß einem exemplarischen Ausführungsbeispiel kann die Erfindung auf der Idee basieren, dass eine sichere und zuverlässige Nachrichtenübertragung (z.B. im Bereich der Schieneninfrastruktur) bereitgestellt werden kann (insbesondere für ein malleables Verschlüsselungsprotokoll), wenn zumindest ein Schlüssel (z.B. der Sitzungsschlüssel KS) bei einer Manipulation des Chiffretexts durch einen Angreifer invalidiert (bzw. zerstört) wird.

Konventionell (siehe das Beispiel von Figur 2) kann es eine Herausforderung sein, eine Manipulation eines Chiffretexts (insbesondere bei einem malleablen Verschlüsselungsprotokoll) zu detektieren, wenn bei der Entschlüsselung ein valider (wenn auch manipulierter) Klartext erhalten wird.

Es wurde nun aber erkannt, dass eine besonders effiziente und sichere Nachrichtenübertragung bereitgestellt werden kann, wenn die Manipulation durch den Angreifer zugleich den Schlüssel entwertet, wodurch bei der Entschlüsselung des manipulierten Chiffretexts dann ein zufälliger (bzw. unsinniger) Klartext erhalten wird, der keinen Schaden mehr anrichten kann.

Dies kann z.B besonders vorteilhaft mittels eines Integritätsschutzes (z.B. ein salt Wert) implementiert werden. Während gewöhnlich nur der Klartext mit einem Integritätsschutz versehen wird, kann erfindungsgemäß auch der Chiffretext mit einem Integritätsschutz versehen werden. Hierbei können der erste Integritätsschutz und der zweite Integritätsschutz derart gekoppelt werden (z.B. über eine bijektive Hilfsfunktion), dass der zum korrekten Entschlüsseln notwendige erste Integritätsschutz des Klartexts nur noch über einen korrekten zweiten Integritätsschutz des Chiffretexts erhalten werden kann. Aber gerade dieser zweite Integritätsschutz des Chiffretexts würde bei einer Manipulation des Chiffretexts verändert werden.

In einem exemplarischen Ausführungsbeispiel (orientiert an dem Beispiel von Figur 2) würde der Integritätscheck der Empfänger-Einheit $s \neq S(P')$ mit hoher Wahrscheinlichkeit feststellen. Jedoch kann dieses System als solches noch nicht als ausfallsicher (fail-safe) eingestuft werden. Wenn dieser Integritätscheck versagen sollte, würde aber erfindungsgemäß der manipulierte Klartext P'' nicht akzeptiert und weiterverarbeitet werden, denn P'' ist durch die Invalidierung des Entschlüsselungsschlüssels (KS) pseudo-zufällig, und nicht mehr gezielt verändert. Dadurch kann eine Bedrohung durch den manipulierten Klartext überwunden werden, so dass das System als fail-safe einstufbar wird. Dies insbesondere, weil es im vorliegenden Zusammenhang weniger darauf ankommt, dass ein Angreifer den übertragenen Text nicht kennen oder nicht manipulieren darf, sondern darauf, dass eine Manipulation als solche erkannt und nicht weiterverarbeitet wird.

Exemplarische Ausführungsbeispiele

Gemäß einem Ausführungsbeispiel weist das Verfahren ferner auf: insbesondere Empfangen, im Rahmen der Nachrichtenübertragung, des Chiffretexts (z.B. an einer Empfänger-Einheit).

Ferner kann das Verfahren aufweisen: Entschlüsseln des Chiffretexts mittels des zumindest einen Schlüssels, um den Klartext zu erhalten (und diesen weiterverarbeiten), wenn der Chiffretext frei von Manipulation ist. In diesem Fall wurde der zumindest eine Schlüssel nicht invalidiert bzw. ist valide. Der entschlüsselte Klartext kann akzeptiert und weiterverarbeitet werden.

Alternativ weist das Verfahren ferner auf: Einstufen des Chiffretexts als manipuliert (und nicht akzeptieren), wenn der zumindest eine Schlüssel durch eine Manipulation des Chiffretexts invalidiert ist (insbesondere ein gegenstandsloser Klartext erhalten wird). Eine Invalidierung des Schlüssels führt zu einem zufälligen und gegenstandslosen Klartext. Daran kann erkannt werden, dass eine Manipulation des Chiffretexts erfolgt ist. Hier kann dann der entschlüsselte (manipulierte) Klartext als inkorrekt und ungültig eingestuft und verworfen werden.

Gemäß einem weiteren Ausführungsbeispiel weist das Verschlüsseln des Klartexts auf: Verwenden eines ersten Integritätsschutzes (insbesondere eines salt Werts), welcher mit dem Klartext assoziiert ist (bzw. der Integritätsschutz wurde basierend auf dem Klartext erstellt).

Gemäß einem weiteren Ausführungsbeispiel weist das Verschlüsseln des Chiffretexts auf: Verwenden eines zweiten Integritätsschutzes (insbesondere eines salt Wertes), welcher mit dem Chiffretext (bzw. der Integritätsschutz wurde basierend auf dem Chiffretext erstellt) und dem ersten Integritätsschutz (z.B. sind der erste Integritätsschutz und der zweite Integritätsschutz über eine Hilfsfunktion gekoppelt) assoziiert ist.

Im Kontext dieses Dokuments kann sich der Begriff "Integritätsschutz" (bzw. "Fingerabdruck") insbesondere auf eine Information beziehen, welche es ermöglicht die Integrität eines Texts (insbesondere eines Klartexts und/oder eines Chiffretexts) zu schützen. Ein exemplarisches Beispiel für einen solchen Integritätsschutz kann eine Prüfsumme (bzw. eine Hashfunktion) sein. Ein weiteres exemplarisches Beispiel kann ein sogenannter MAC (message authentication code) sein. Ein sogenannter salt Wert kann in diesem Zusammenhang eine (zufällig gewählte) Zeichenfolge (bzw. Bitfolge) sein, welche einem Text (Klartext und/oder Chiffretext) angehängt wird, um die Entropie zu erhöhen. In einem Beispiel kann ein salt Wert an einen Text angehängt werden und die Kombination kann dann gehasht werden. In einem weiteren Beispiel kann der Integritätsschutz verschlüsselt werden und/oder Teil der Ableitung eines Verschlüsselungs-/Entschlüsselungsschlüssels sein.

In anderen Worten kann ein Integritätsschutz für einen bestimmten Text indikativ sein (bzw. eine sichere Identifikation/Validierung ermöglichen), wobei aber eine Manipulation des Texts dafür sorgt, dass der Integritätsschutz für den manipulierten Text nicht mehr indikativ ist. Das Erstellen des Integritätsschutzes kann im vorliegenden Kontext als eine Art des Verschlüsseln angesehen werden. Das Erhalten/Ableiten eines Integritätsschutzes kann wiederum als Entschlüsseln angesehen werden.

Gemäß einem weiteren Ausführungsbeispiel weist das Verschlüsseln auf: Koppeln des ersten Integritätsschutzes mit dem zweiten Integritätsschutz (insbesondere mittels einer Hilfsfunktion, siehe unten). Gemäß einem weiteren Ausführungsbeispiel weist das Entschlüsseln auf: Entschlüsseln bzw. Erhalten des ersten Integritätsschutzes basierend auf dem zweiten Integritätsschutz.

In anderen Worten können der erste Integritätsschutz (betreffend den Klartext) und der zweite Integritätsschutzes (betreffend den Chiffretext) miteinander assoziiert bzw. gekoppelt sein. Dies kann z.B. mittels einer Hilfsfunktion erfolgen. Auf diese Weise kann z.B. der erste Integritätsschutz dadurch erhalten werden, dass der zweite Integritätsschutz bekannt ist. Ändert sich ein Integritätsschutz durch eine Manipulation des Chiffretexts, so kann es verunmöglicht werden, dass ein Integritätsschutz mittels des anderen Integritätsschutzes erhalten wird.

Gemäß einem weiteren Ausführungsbeispiel verändert eine Manipulation des Chiffretexts den zweiten Integritätsschutz derart, dass ein (korrektes) Entschlüsseln/Erhalten des ersten Integritätsschutzes, welcher mit dem zweiten Integritätsschutz assoziiert ist, verunmöglicht ist. In anderen Worten kann der erste Integritätsschutz ohne den zweiten Integritätsschutz nicht wiederhergestellt werden.

Gemäß einem weiteren Ausführungsbeispiel weist das Verschlüsselungsprotokoll ein malleables oder ein nicht-malleables Verschlüsselungsprotokoll auf. Wie oben bereits diskutiert kann ein malleables Verschlüsselungsprotokoll (z.B. Strom-Chiffre) anfälliger für Manipulationen sein als ein nicht-malleables Verschlüsselungsprotokoll, wobei ersteres aber u.U. eine bessere Performance bzw. höhere Geschwindigkeit erreichen kann.

Gemäß einem weiteren Ausführungsbeispiel weist das Verschlüsselungsprotokoll eine homomorphe Chiffre, insbesondere eine Strom-Chiffre, auf. Dadurch können etablierte Verschlüsselungsprotokolle direkt für die Erfindung verwendet werden.

Gemäß einem weiteren Ausführungsbeispiel weist der erste Integritätsschutz und/oder der zweite Integritätsschutz (bzw. der dritte Integrationsschutz) zumindest eines auf von: einem salt Wert, einem MAC, einem Hash-Wert (bzw. eine Prüfsumme). Auf diese Weise kann der Integritätsschutz mittels erprobter und etablierter Konzepte implementiert werden.

Gemäß einem weiteren Ausführungsbeispiel ist die Nachrichtenübertragung als ausfallsicher (fail-safe) einstufbar, insbesondere konform mit Standard EN50159 und/oder EN50129. Dadurch kann sich eine besondere Sicherheit der Nachrichtenübertragung ergeben, welche insbesondere im Bereich der Schienen-Infrastruktur von besonderer Bedeutung sein kann.

Gemäß einem weiteren Ausführungsbeispiel wird die Nachricht über ein nicht-vertrauenswürdiges Netzwerk übertragen. In diesem Fall kann das beschriebene Verschlüsselungsprotokoll besonders nützlich sein.

Gemäß einem weiteren Ausführungsbeispiel ist der Inhalt der Nachricht sicherheitsrelevant. Für sicherheitsrelevante Aspekte (z.B. Signale, Weichen, usw.) können besondere Vorkehrungen notwendig sein, die technisch oft nicht einfach zu erreichen sind.

Gemäß einem weiteren Ausführungsbeispiel ist die Nachricht mit einer Schienen-Infrastruktur assoziiert. In diesem Bereich mit besonders hohen Sicherheitsstandards bei gleichzeitig hoher Dichte an Nachrichtenübertragung (insbesondere malleablen Protokollen wegen der hohen Geschwindigkeit) kann das beschriebene Verfahren besonders effizient einsetzbar sein.

Prinzipiell kann das beschriebene Verfahren für jedes Sicherheitslevel (SIL) der sicherheitsrelevanten Applikation geeignet sein, von Basisintegrität bis SIL4, da die Überwachung der korrekten Funktion des Zugriffschutzes hier nebenbei durch das Sicherheitsprotokoll innerhalb der sicherheitsrelevanten Applikation selbst erfolgt, das die Applikation bereits benötigt, um über vertrauenswürdige Netzwerke (z.B. Kategorie 2 gemäß EN50159) sicherheitsrelevant kommunizieren zu können. Das Sicherheitsprotokoll ist damit bereits für den jeweiligen SIL der sicherheitsrelevanten Applikation geeignet vorhanden und kann dann direkt verwendet werden.

Gemäß einem weiteren Ausführungsbeispiel weist das Verschlüsseln und/oder das Entschlüsseln einen (im Voraus geteilten) Master-Schlüssel auf. Dadurch kann die Sicherheit weiter erhöht werden.

Gemäß einem weiteren Ausführungsbeispiel weist das Verschlüsseln und/oder das Entschlüsseln einen (im Voraus geteilten) Schlüssel-Generator auf. Dadurch kann ebenfalls die Sicherheit weiter erhöht werden. Ein solcher Generator wird z.B. bei Strom-Chiffren eingesetzt (siehe Figur 3).

Gemäß einem weiteren Ausführungsbeispiel wird der erste Integritätsschutz mittels einer ersten Integritätsschutz-Funktion erstellt. Gemäß einem weiteren Ausführungsbeispiel wird der zweite Integritätsschutz mittels einer zweiten Integritätsschutz-Funktion erstellt. Dies kann eine effiziente Implementierung ermöglichen. Die Funktion (z.B. Hashfunktion) kann im Voraus geteilt werden.

Gemäß einem weiteren Ausführungsbeispiel weist das Verschlüsseln und/oder das Entschlüsseln einen Verschlüsselungsschlüssel (bzw. Entschlüsselungsschlüssel) (oder Sitzungsschlüssel) auf, insbesondere welcher den Master-Schlüssel, den Schlüssel-Generator, und den ersten Integritätsschutz kombiniert (bzw. aus diesen ableitbar ist). Mittels dieses etablierten Verfahrens (siehe Figur 2) kann ein besonders effizienter Verschlüsselungs-/Entschlüsselungsschlüssel erhalten werden. Wenn der erste Integritätsschutz mit einem zweiten Integritätsschutz gekoppelt ist, dann würde eine Manipulation des Chiffretexts ein Erhalten des ersten Integritätsschutzes aus dem zweiten Integritätsschutz verunmöglichen. Dadurch wäre der Verschlüsselungsschlüssel/Entschlüsselungsschlüssel, der den ersten Integritätsschutz benötigt, um abgeleitet zu werden, invalidiert.

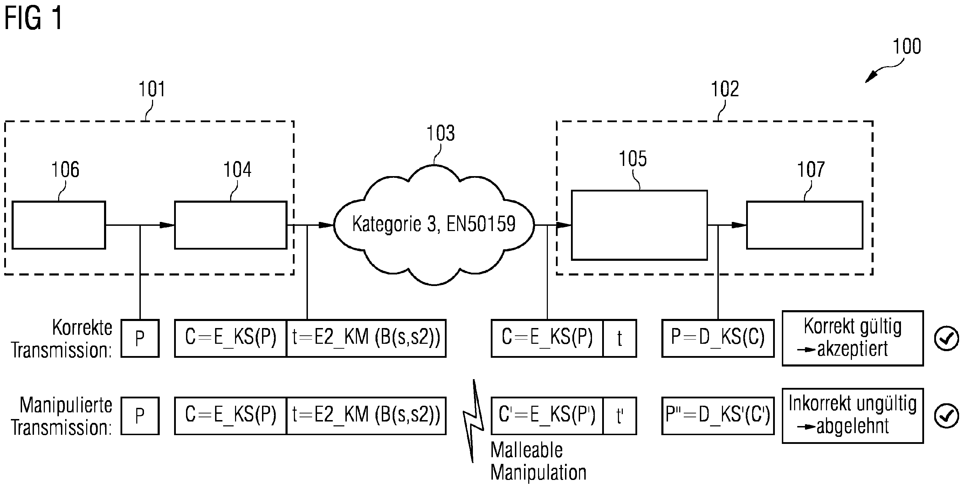

Gemäß einem weiteren Ausführungsbeispiel wird der erste Integritätsschutz und/oder der zweite/dritte Integritätsschutz verschlüsselt, insbesondere wobei das Verschlüsselungsprotokoll nicht-malleabel ist. Um die Sicherheit weiter zu erhöhen, kann der Integritätsschutz ebenfalls verschlüsselt werden (siehe Figur 1). Wird hier eine nicht-malleable Verschlüsselungsfunktion verwendet, so kann die Sicherheit noch weiter erhöht werden.

Gemäß einem weiteren Ausführungsbeispiel ist das Verschlüsseln und/oder das Entschlüsseln symmetrisch oder asymmetrisch. Beide Varianten können Vorteile bezüglich Sicherheit und Performance bieten und entsprechend umgesetzt werden.

Gemäß einem weiteren Ausführungsbeispiel sind der erste Integritätsschutz und der zweite (bzw. dritte) Integritätsschutz über eine bijektive (Hilfs-) Funktion gekoppelt. Dies kann eine einfache und effiziente Implementierung sein, um den ersten Integritätsschutz und den zweiten Integritätsschutz miteinander zu koppeln bzw. abhängig voneinander zu machen. Ein detailliertes Ausführungsbeispiel ist in der Beschreibung von Figur 1 unten gegeben.

Gemäß einem weiteren Ausführungsbeispiel weist das Verfahren ferner auf: Erstellen eines dritten Integritätsschutzes, welches mit dem Klartext und dem Chiffretext gekoppelt ist, wobei der dritte Integritätsschutz mit dem ersten Integritätsschutz und dem zweiten Integritätsschutz gekoppelt ist. Diese weitere Sicherheitsstufe kann es ermöglichen, den ersten Integritätsschutz und den zweiten Integritätsschutz innerhalb eines dritten Integritätsschutzes (insbesondere mittels der bijektiven Hilfsfunktion) zu koppeln.

Im vorliegenden Kontext kann t zusammen mit s2 als zweiter Integritätsschutz verstanden werden. Ferner kann s2 aber auch als zweiter Integritätsschutz und t als dritter Integritätsschutz verstanden werden.

In einem exemplarischen Beispiel wird s verschlüsselt übertragen in einem neuen Wert t, wobei zur Verschlüsselung von s zu t ein geheimer Schlüssel KM als erster Teilschlüssel sowie der aus dem Chiffretext C berechnete salt (auch Hash-Wert oder Fingerabdruck) s2 als zweiter Teilschlüssel verwendet wird. Damit ist die korrekte Entschlüsselung von s aus t mit hoher Wahrscheinlichkeit nur dann möglich, wenn der Empfänger den korrekten Chiffretext C empfangen hat und daraus den korrekten zweiten Teilschlüssel $s2 = S2(C)$ berechnen konnte.

In einem Ausführungsbeispiel können der erste Integritätsschutz (s) und der dritte Integritätsschutz (t) zueinander bijektiv sein. Bei festem s2 stellt B(*,s2) dann eine mittels s2 parametrisierte bijektive Zuordnung zwischen s und t her; s wird abgebildet auf $t = D2\_KM(B(s,s2))$ und umgekehrt.

In einem Ausführungsbeispiel besteht zwischen $s=S(P)$ und $s2=S2(C)$ in der Regel keine bijektive (eineindeutige) Zuordnung, da es z.B. nicht ausgeschlossen ist, dass zwei unterschiedliche salt Werte $s=S(P)$ und $s'=S(P')$ von unterschiedlichen Klartexten P und P' existieren, mit aber gleichen salt Werten s2=S2(C) und s2'=S2(C'), wobei C=E_KS(P) und C'=E_KS(P'). Dies kann in einem Beispiel deswegen nicht ausgeschlossen werden, da die salt Funktionen S und S2 z.B. Hash-Funktionen sind, die von einem großen Urbildraum in einen kleineren Bildraum abbilden und somit zu Kollisionen führen können wie z.B. die o.g. Kollision s2=s2'.

In einem Ausführungsbeispiel besteht zwischen s und s2 die Beziehung, dass sie aus demselben Klartext entstehen. Zwischen s, s2 und t besteht zudem die Beziehung, dass bei Kenntnis von je 2 der 3 Werte mittels B und D2_KM auf den jeweils dritten Wert geschlossen werden kann. Dies kann z.B. wie folgt genutzt werden:

1. Fall ohne Manipulation von C: Kenntnis von s und s2 liefert t.
2. Fall ohne Manipulation von C: Kenntnis von t und s2 liefert s.
3. Fall mit Manipulation von C: Bei Kenntnis von t, jedoch Unkenntnis von s2 (da C durch die Manipulation unbekannt), kann nicht auf s geschlossen werden.

In einem Ausführungsbeispiel stellt s2 damit einen (zweiten) Integritätsschutz für den Chiffretext C (und somit auch für den Klartext P) dar, der zunächst nicht (wie t) auch noch direkt vom Klartext P abhängt. Da s2 jedoch nicht übertragen wird, kann der Empfänger dessen Korrektheit (anders als bei s) nur implizit prüfen; z.B. in einer Krypto-Box durch s=S(P) und in der sicherheitsrelevanten Applikation durch die Gültigkeitsprüfung.

Gemäß einem weiteren Ausführungsbeispiel wird der Chiffretext mit dem dritten Integritätsschutz übertragen. Entsprechend kann die Empfänger-Einheit alle notwendigen Informationen erhalten, um den Chiffretext zu entschlüsseln und auf potenzielle Manipulation zu prüfen.

Gemäß einem weiteren Ausführungsbeispiel wird der dritte Integritätschutz verschlüsselt, insbesondere wobei das Verschlüsselungsprotokoll hierfür nicht-malleabel ist. Um die Sicherheit weiter zu erhöhen, kann der dritte Integritätsschutz ebenfalls verschlüsselt werden (siehe Figur 1). Wird hier eine nicht-malleable Verschlüsselungsfunktion verwendet, so kann die Sicherheit noch weiter erhöht werden.

Gemäß einem weiteren Ausführungsbeispiel weist die Sender-Einheit und/oder die Empfänger-Einheit auf: eine kryptografische Einheit, insbesondere eine Krypto-Box, welche eingerichtet ist zum Verschlüsseln und/oder Entschlüsseln (des Klartexts bzw. des Chiffretexts).

Gemäß einem weiteren Ausführungsbeispiel ist die kryptografische Einheit nicht als ausfallsicher einstufbar.

In einem Beispiel kann die kryptografische Einheit eine Standardvorrichtung sein, welche das Verschlüsseln und/oder Entschlüsseln technisch umsetzt. Beispielsweise kann die kryptografische Einheit zu diesem Zweck ein oder mehr Prozessoren aufweisen. Eine solche kryptografische Einheit kann gewissen Standards unterliegen, allerdings kann (im Wesentlichen) nicht davon ausgegangen werden, dass die kryptografische Einheit tatsächlich ausfallsicher im vorliegenden Kontext ist. Entsprechend kann das erfindungsgemäße Verfahren dafür sorgen, dass dennoch ein (mit sehr hoher Wahrscheinlichkeit) ausfallsicheres System vorliegt.

Es ist zu beachten, dass Ausführungsformen der Erfindung unter Bezugnahme auf verschiedene Gegenstände beschrieben wurden. Insbesondere wurden einige Ausführungsformen unter Bezugnahme auf Verfahrensansprüche beschrieben, während andere Ausführungsformen unter Bezugnahme auf Vorrichtungsansprüche beschrieben wurden. Ein Fachmann wird jedoch aus dem Vorstehenden und der folgenden Beschreibung entnehmen, dass, sofern nicht anders angegeben, neben jeder Kombination von Merkmalen, die zu einer Art von Gegenstand gehören, auch jede Kombination von Merkmalen, die sich auf verschiedene Gegenstände beziehen, als von diesem Dokument offenbart gilt. Dies insbesondere auch zwischen Merkmalen der Verfahrensansprüche und Merkmalen der Vorrichtungsansprüche.

Die oben definierten Aspekte und weitere Aspekte der vorliegenden Erfindung ergeben sich aus den nachstehend zu beschreibenden Beispielen der Ausführungsformen und werden unter Bezugnahme auf die Beispiele der Ausführungsformen erläutert. Die Erfindung wird im Folgenden unter Bezugnahme auf Ausführungsformen, auf die die Erfindung jedoch nicht beschränkt ist, näher beschrieben.

Kurze Beschreibung der Zeichnungen

Figur 1 zeigt ein Nachrichtenübertragung-System gemäß einem exemplarischen Ausführungsbeispiel der Erfindung.
Figur 2 zeigt ein konventionelles Nachrichtenübertragung-System.
Figur 3 zeigt schematisch die Funktionsweise des malleablen Verschlüsselungsprotokolls Strom-Chiffre.

Detaillierte Beschreibung der Zeichnungen

Die Darstellung in den Zeichnungen ist schematisch. Es wird darauf hingewiesen, dass in unterschiedlichen Abbildungen ähnliche oder identische Elemente oder Merkmale mit den gleichen Bezugszeichen oder mit Bezugszeichen versehen sind, die sich von den entsprechenden Bezugszeichen nur innerhalb der ersten Ziffer unterscheiden. Um unnötige Wiederholungen zu vermeiden, werden Elemente oder Merkmale, die bereits in Bezug auf eine zuvor beschriebene Ausführungsform erläutert wurden, an einer späteren Stelle der Beschreibung nicht noch einmal erläutert.

Darüber hinaus werden räumlich relative Begriffe wie "vorne" und "hinten", "oben" und "unten", "links" und "rechts" usw. verwendet, um die Beziehung eines Elements zu einem anderen Element zu beschreiben, wie in den Abbildungen dargestellt. So können die räumlich relativen Begriffe auf verwendete Orientierungen zutreffen, die von der in den Abbildungen dargestellten Orientierung abweichen. Offensichtlich beziehen sich diese räumlich relativen Begriffe lediglich auf eine Vereinfachung der Beschreibung und die in den Abbildungen gezeigte Orientierung und sind nicht notwendigerweise einschränkend, da eine Vorrichtung gemäß einer Ausführungsform der Erfindung andere Orientierungen als die in den Abbildungen dargestellten annehmen kann, insbesondere wenn sie verwendet wird.

Figur 1 zeigt ein Nachrichtenübertragung-System 100 gemäß einem exemplarischen Ausführungsbeispiel der Erfindung. Prinzipiell ist der Aufbau dieses System 100 mit jenem der Figur 2 vergleichbar. Allerdings ist die erfindungsgemäße Funktionsweise eine andere.

Figur 1 zeigt detailliert ein Nachrichtenübertragung-System 100 mit einem (nicht vertrauenswürdigen) Netzwerk 103 zwischen einer Sender-Einheit 101 (z.B. in einer Leitstelle) und einer Empfänger-Einheit 102 (z.B. in einem Zug). Die Sender-Einheit 101 weist eine sicherheitsrelevante Applikation (z.B. bezüglich Ampelsignalen) 106 auf, welche mit einer sogenannten Krypto-Box 104 gekoppelt ist. Entsprechend weist die Empfänger-Einheit 102 ebenfalls eine Krypto-Box 105 auf, welche mit einer weiteren sicherheitsrelevanten Applikation 107 gekoppelt ist. Zwischen Applikation 106, 107 und Krypto-Box 104, 105 wird jeweils der Klartext P übertragen, während zwischen den Krypto-Boxen 104, 105 (und über das Netzwerk 103) der Chiffretext C übertragen wird. Das Netzwerk 103 hat in diesem Beispiel die Sicherheitskategorie 3 und entspricht dem Standard EN50159.

Die folgende Tabelle ergänzt die Begrifflichkeiten des Beispiels von Figur 2 um die neuen erfindungsgemäßen Konzepte.

| t | Pseudo-zufälliger Klartext-abhängiger UND Chiffretext-abhängiger verschlüsselter salt Wert; abgeleitet mittels $t=E2\_KM(B(s,s2))$. |
|---|---|
| s2 | Pseudo-zufälliger Chiffretext-abhängiger salt Wert; abgeleitet mittels $s2=S2(C)$. |
| S2 | Im Voraus geteilte pseudo-zufällige salt Funktion. |
| B | Im Voraus geteiltes Mapping $B(x,y)=z$ (für Bitabfolgen x,y,z), welches bijektiv in beiden Argumenten ist. Deswegen sind insbesondere die Mappings $B1_x(\cdot)=B(x,\cdot)$ beziehungsweise $B2_y(\cdot)=B(\cdot,y)$ bijektiv für jeden festen Wert von x bzw. y und deren inversen Mappings $B1_x^{-1}(z)=y$ bzw. $B2_y^{-1}(z)=x$; wobei $B(x,y)=z$ existiert. Beispiel: $B(x,y)=(x\ XOR\ y)$ kann solch ein Mapping sein, weil $B1_x(\cdot)=(x\ XOR\ \cdot)$ bzw. $B2_y(\cdot)=(\cdot\ XOR\ y)$ bijektiv sind für jeden festen Wert von x bzw. y und deren inversen Mappings |
| | $B1_x^{-1}(z)=(x\ XOR\ z)=y$ bzw. $B2_y^{-1}(z)=(z\ XOR\ y)=x$; wobei $B(x,y)=z=(x\ XOR\ y)$ existiert. |
| B(s,s2) | Klartext-abhängiger UND Chiffretext-abhängiger salt Wert; abgeleitet von dem Klartext-abhängigen salt Wert s und dem Chiffretext-abhängigen salt Wert s2. |
| E2 | Zweite Verschlüsselungsfunktion |
| D2 | Zweite Entschlüsselungsfunktion (für E2). |

Die erfindungsgemäße Nachrichtenübertragung kann z.B. wie folgt ablaufen:

1. Im Voraus teilen von KM, G, S zwischen Sender-Einheit 101 und Empfänger-Einheit 102.
2. Die Sender-Einheit 101 leitet $s=S(P)$ ab und dann

$$KS=G(KM,s).$$

3. Die Sender-Einheit 101 erzeugt den Chiffretext: $C=E\_KS(P)$.
4. Die Sender-Einheit 101 leitet ab: $s2=S2(C)$ und dann

$$t=E2\_KM\ (B(s,s2)).$$

5. Die Sender-Einheit 101 überträgt das Paar (C,t) an die Empfänger-Einheit 102.

6. Die Empfänger-Einheit 102 leitet den Chiffretext-abhängigen Integritätsschutz ab: s2=S2(C).

7. Die Empfänger-Einheit 102 leitet ab (entschlüsselt) den Klartext-abhängigen UND Chiffretext-abhängigen Integritätsschutz: B(s,s2)=D2_KM(t).

8. Die Empfänger-Einheit 102 leitet mittels des abgeleiteten Integritätsschutzes s2 den Klartext-abhängigen Integritätsschutz s ab: $s=B1_{s2}^{-1}$ (B (s, s2)).

9. Die Empfänger-Einheit 102 leitet ab: KS=G(KM,s).

10. Die Empfänger-Einheit 102 entschlüsselt den Klartext P:

$$P=D\_KS(C).$$

11. Die Empfänger-Einheit 102 bewertet die Integrität von dem entschlüsselten Klartext P mittels Kontrollierens dass gilt: s=S(P).

Im Fall einer korrekten Nachrichtenübertragung (Transmission) wird ein korrekter und gültiger Klartext P erhalten, der akzeptiert und weiterverarbeitet wird.

Tritt nun der Fall auf, dass die kryptographische Integritätskontrolle (bzw. Krypto-Box 105) versagen sollte (siehe Beispiel der Figur 2 oben), so wird ein manipulierter Klartext P" dennoch nicht akzeptiert werden. Durch das Anwenden des zweiten Integritätsschutzes s2 auf den Chiffretext C wird der erste Integritätsschutz s und damit der Verschlüsselungs-/Entschlüsselungsschlüssel KS invalidiert (bzw. zerstört). Zum Entschlüsseln wird daher der korrekte zweite Integritätsschutz s2 benötigt, denn dieser ist mit dem ersten Integritätsschutz s derart (insbesondere über die bijektive Hilfsfunktion B) gekoppelt, dass s nur aus korrektem s2 und t erhalten werden kann (s2 allein enthält in diesem Beispiel nicht alle Informationen zur Rekonstruktion von s).

Wird aber nun der Chiffretext C manipuliert zu C', so ändert sich auch s2 und s kann nicht mehr erhalten werden. Ein entsprechend erhaltener manipulierter Klartext P" kann nun eindeutig als inkorrekt und ungültig identifiziert und abgelehnt werden. Entsprechend kann das beschriebene erfindungsgemäße Nachrichtenübertragung System 100 als fail-safe bezeichnet werden.

Im Detail: selbst wenn E eine malleable Chiffre (bzw. Verschlüsselungsprotokoll) ist (siehe Definition oben), dann führt das erfindungsgemäße Protokoll zu folgenden Ableitungen an der Empfänger-Einheit 102:

a) ein inkorrekter Chiffretext-abhängiger zweiter Integritätsschutz s2'=S2(C') (mit hoher Wahrscheinlichkeit).

b) ein korrekter (denn t wird im schlechtesten Fall nicht vom Angreifer manipuliert und somit wäre B(s,s2) zunächst korrekt rekonstruiert/entschlüsselt) Klartext-abhängiger und Chiffretext-abhängiger Integritätsschutz B(s,s2) =D2_KM(t).

c) mittels des inkorrekt abgeleiteten Integritätsschutzes s2' ein inkorrekter Klartext-abhängiger Integritätsschutz $s'=B1_{s2'}^{-1}$ (B(s,s2)), welcher sich immer von dem korrekten Integritätsschutz s unterscheidet.

Mathematische Begründung:

Wenn das Gegenteil wahr wäre und $s'=B1_{s2'}^{-1}$ (B(s,s2))=s wäre, obwohl s2 und s2' unterschiedlich sind, dann wäre einerseits $B1_{s2'}(s)=B$ (s, s2), aber auch andererseits $B1_{s2}(s)=B(s,s2')$ durch die Definition von B1. Beides zusammen ergäbe B(s,s2)=B(s,s2'). Wendet man nun $B2_s$ auf beiden Seiten der Gleichung an, so führt dies zu dem Widerspruch, dass gelten würde s2=s2'.

d) mittels des inkorrekt abgeleiteten Integritätsschutzes s ein inkorrekter Klartext-abhängiger symmetrischer Verschlüsselungsschlüssel KS'=G(KM,s').

e) Entschlüsseln eines inkorrekten Klartexts P"=D_KS'(C') mittels des inkorrekt abgeleiteten Schlüssels KS'. P" unterscheidet sich in unvorhersehbarer Weise von dem Klartext P', welcher von dem Angreifer vorgesehen war, denn die Empfänger-Einheit 102 ist nicht in der Lage, den Chiffretext-abhängigen symmetrischen Verschlüsselungsschlüssel KS korrekt wiederherzustellen.

Es sei darauf hingewiesen, dass der Begriff "aufweisend" andere Elemente oder Schritte nicht ausschließt und die Verwendung des Artikels "ein" eine Vielzahl nicht ausschließt. Auch Elemente, die in Verbindung mit verschiedenen Ausführungsformen beschrieben werden, können kombiniert werden. Es ist auch darauf hinzuweisen, dass Bezugszeichen in den Ansprüchen nicht so ausgelegt werden sollten, dass sie den Umfang der Ansprüche einschränken.

Unabhängig vom grammatikalischen Geschlecht eines bestimmten Begriffes sind Personen mit männlicher, weiblicher oder anderer Geschlechtsidentität mit umfasst.

**Patentansprüche**

1. Ein Computer-implementiertes Verfahren zur Nachrichtenübertragung, das Verfahren aufweisend:

   Verschlüsseln (E) eines Klartexts (P) unter Verwenden von zumindest einem Schlüssel (KS), um einen Chiffretext (C) zu erhalten derart, dass eine Manipulation des Chiffretexts (C') den zumindest einen Schlüssel (KS) bezüglich eines Entschlüsselns (D) invalidiert.

2. Das Verfahren gemäß Anspruch 1, ferner aufweisend:

   Entschlüsseln (D) des Chiffretexts (C) mittels des zumindest einen Schlüssels (KS), um den Klartext (P) zu erhalten, wenn der Chiffretext (C) frei von Manipulation ist,
   oder
   Einstufen des Chiffretexts (C') als manipuliert, wenn der zumindest eine Schlüssel (KS) durch eine Manipulation des Chiffretexts (C') invalidiert ist.

3. Das Verfahren gemäß Anspruch 1 oder 2,

   wobei das Verschlüsseln (E) des Klartexts (P) aufweist: Verwenden eines ersten Integritätsschutzes (s), welcher mit dem Klartext (P) assoziiert ist; und
   wobei das Verschlüsseln des Chiffretexts (C) aufweist: Verwenden eines zweiten Integritätsschutzes (s2, t), welcher mit dem Chiffretext (C) und dem ersten Integritätsschutz (s) assoziiert ist.

4. Das Verfahren gemäß Anspruch 3,

   wobei das Verschlüsseln (E) aufweist:
   Koppeln des ersten Integritätsschutzes (s) mit dem zweiten Integritätsschutz (s2, t),
   und/oder
   wobei das Entschlüsseln (D) aufweist:
   Erhalten des ersten Integritätsschutzes (s) basierend auf dem zweiten Integritätsschutz (s2, t);
   insbesondere wobei eine Manipulation des Chiffretexts (C') den zweiten Integritätsschutz (s2) derart verändert, dass ein korrektes Erhalten des ersten Integritätsschutzes (s), welcher mit dem zweiten Integritätsschutz (s2, t) gekoppelt ist, verunmöglicht ist.

5. Das Verfahren gemäß einem der vorherigen Ansprüche, wobei das Verschlüsselungsprotokoll ein malleables oder ein nicht-malleables Verschlüsselungsprotokoll aufweist.

6. Das Verfahren gemäß Anspruch 5,
   wobei das Verschlüsselungsprotokoll eine homomorphe Chiffre, insbesondere eine Strom-Chiffre, aufweist.

7. Das Verfahren gemäß einem der vorhergehenden Ansprüche, wobei der erste Integritätsschutz (s) und/oder der zweite Integritätsschutz (s2, t) zumindest einen der folgenden aufweist: einen salt Wert, einen message authentication code, MAC, Wert, einen Hash-Wert.

8. Das Verfahren gemäß einem der vorhergehenden Ansprüche, wobei die Nachrichtenübertragung als ausfallsicher einstufbar ist, insbesondere konform mit Standard EN50159.

9. Das Verfahren gemäß einem der vorhergehenden Ansprüche, aufweisend zumindest eines der folgenden Merkmale:

   wobei die Nachricht über ein nicht-vertrauenswürdiges Netzwerk (103) übertragen wird;
   wobei der Inhalt der Nachricht sicherheitsrelevant ist;

wobei die Nachricht mit einer Schienen-Infrastruktur assoziiert ist;

wobei das Verschlüsseln (E) und/oder das Entschlüsseln (D) einen Master-Schlüssel (KM) aufweist;

wobei das Verschlüsseln (E) und/oder das Entschlüsseln (D) einen Schlüssel-Generator (G) aufweist;

wobei der erste Integritätsschutz (s) mittels einer ersten Integritätsschutz-Funktion (S) erstellt wird;

wobei der zweite Integritätsschutz (s2) mittels einer zweiten Integritätsschutz-Funktion (S2) erstellt wird;

wobei das Verschlüsseln (E) und/oder das Entschlüsseln (D) einen Verschlüsselungsschlüssel (KS) und/oder Entschlüsselungsschlüssel aufweist, insbesondere welcher basierend auf dem Master-Schlüssel (KM), dem Schlüssel-Generator (G) und dem ersten Integritätsschutz (s) ableitbar ist;

wobei zumindest einer von Master-Schlüssel (KM), Schlüssel-Generator (G), erste Integritätsschutz-Funktion (S), im Voraus geteilt wird;

wobei der erste Integritätsschutz (s) und/oder der zweite Integritätsschutz (s2) verschlüsselt wird, insbesondere wobei das Verschlüsselungsprotokoll nicht-malleabel ist;

wobei das Verschlüsseln (E) und/oder das Entschlüsseln (D) symmetrisch oder asymmetrisch ist.

10. Das Verfahren gemäß einem der vorhergehenden Ansprüche 3 bis 9,

wobei der erste Integritätsschutz (s) und der zweite Integritätsschutz (s2, t) über eine bijektive Hilfsfunktion (B) gekoppelt sind.

11. Das Verfahren gemäß einem der vorhergehenden Ansprüche 3 bis 10, ferner aufweisend:

Erstellen eines dritten Integritätsschutzes (t), welcher mit dem Klartext (P) und dem Chiffretext (C) gekoppelt ist, wobei der dritte Integritätsschutz (t) mit dem ersten Integritätsschutz (s) und dem zweiten Integritätsschutz (s2) gekoppelt ist;

insbesondere

wobei der Chiffretext (C) mit dem dritten Integritätsschutz (t) übertragen wird; und/oder

wobei der dritte Integritätschutz (t) verschlüsselt wird, insbesondere wobei das Verschlüsselungsprotokoll (E2) hierfür nicht-malleabel ist.

12. Eine Nachrichtenübertragung-System (100), insbesondere im Bereich der Schienen-Infrastruktur, aufweisend:

eine Sender-Einheit (101), eingerichtet zum Übertragen einer Nachricht gemäß Anspruch 1;

eine Empfänger-Einheit (102), eingerichtet zum Empfangen der Nachricht gemäß Anspruch 2; und

ein Netzwerk (103), über welches die Nachricht übertragen wird.

13. Das Nachrichtenübertragung System (100) gemäß Anspruch 12, wobei die Sender-Einheit (101) und/oder die Empfänger-Einheit (102) aufweist:

eine kryptografische Einheit (104, 105), insbesondere eine Krypto-Box, welche eingerichtet ist zum Verschlüsseln (E) und/oder Entschlüsseln (D),

insbesondere wobei die kryptografische Einheit (104, 105) nicht als ausfallsicher einstufbar ist.

14. Verwenden eines Verschlüsselungsprotokolls, bei welchem sich ein Schlüssel (KS) bei einer Manipulation eines gekoppelten Chiffretexts (C) selbst bezüglich einem Entschlüsseln invalidiert, um eine ausfallsichere Nachrichtenübertragung bereitzustellen, insbesondere im Fall eines malleablen Verschlüsselungsprotokolls.

15. Ein Computerprogrammprodukt, welches Befehle aufweist, die bei der Ausführung des Programms durch einen Computer diesen veranlassen, das Verfahren gemäß einem beliebigen der Ansprüche 1 bis 11 auszuführen.

**FIG 1**

Korrekte Transmission:

| P | $C = E\_KS(P)$ | $t = E2\_KM\,(B(s,s2))$ |

| $C = E\_KS(P)$ | t |

| $P = D\_KS(C)$ |

Korrekt gültig →akzeptiert ✓

Manipulierte Transmission:

| P | $C = E\_KS(P)$ | $t = E2\_KM\,(B(s,s2))$ |

Malleable Manipulation

| $C' = E\_KS(P')$ | t' |

| $P'' = D\_KS'(C')$ |

Inkorrekt ungültig →abgelehnt ✓

Kategorie 3, EN50159

EP 4 471 643 A1

# FIG 2

Prior Art

EP 4 471 643 A1

# FIG 3

(Pseudo-) zufälliger Schlüsselstrom

01101 01000 11100 ....

Klartext

01001 10001 11000 ....

chiffretext

00100 11001 00100 ...

G

P

C

Europäisches
Patentamt

European
Patent Office

Office européen
des brevets

**EUROPÄISCHER RECHERCHENBERICHT**

Nummer der Anmeldung

EP 23 17 6350

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 808 026 B1 (KONINKLIJKE PHILIPS NV [NL]) 13. Oktober 2021 (2021-10-13) * Absätze [0003], [0024] – [0026], [0042], [0074] – [0084] * ----- | 1-15 | INV. G06F21/64 H04L9/06 H04L9/12 H04L9/40 |
| A | DE 10 2015 223152 A1 (SIEMENS AG [DE]) 24. Mai 2017 (2017-05-24) * Absätze [0020], [0045] * ----- | 1-15 | |

**RECHERCHIERTE SACHGEBIETE (IPC)**

G06F
H04L

Der vorliegende Recherchenbericht wurde für alle Patentansprüche erstellt

| Recherchenort | Abschlußdatum der Recherche | Prüfer |
|---|---|---|
| München | 16. Oktober 2023 | Herzog, Till-Henning |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

..........................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 17 6350

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-10-2023

| Im Recherchenbericht angeführtes Patentdokument | Datum der Veröffentlichung | Mitglied(er) der Patentfamilie | | Datum der Veröffentlichung |
|---|---|---|---|---|
| EP 3808026 B1 | 13-10-2021 | CN | 112385175 A | 19-02-2021 |
| | | EP | 3584991 A1 | 25-12-2019 |
| | | EP | 3808026 A1 | 21-04-2021 |
| | | JP | 2021528899 A | 21-10-2021 |
| | | US | 2021266175 A1 | 26-08-2021 |
| | | WO | 2019243209 A1 | 26-12-2019 |
| DE 102015223152 A1 | 24-05-2017 | DE | 102015223152 A1 | 24-05-2017 |
| | | EP | 3347851 A1 | 18-07-2018 |
| | | WO | 2017089052 A1 | 01-06-2017 |

EPO FORM P0461

Für nähere Einzelheiten zu diesem Anhang : siehe Amtsblatt des Europäischen Patentamts, Nr.12/82